# EUROPÄISCHE PATENTSCHRIFT

(11) **EP 3 600 845 B1**
(45) Veröffentlichungstag und Bekanntmachung des Hinweises auf die Patenterteilung: **12.10.2022**
(21) Anmeldenummer: 17721384.0
(22) Anmeldetag: 04.05.2017
(51) Int. Cl.: B22F 10/00, B22F 12/00, B29C 64/259, B29C 64/245, B29C 64/307, B33Y 30/00, B33Y 40/00, B65D 83/06, B22F 3/105, B22F 10/20

(54) **WECHSELKAMMER FÜR EINE VORRICHTUNG UND EIN VERFAHREN ZUM GENERATIVEN HERSTELLEN EINES DREIDIMENSIONALEN OBJEKTS**
CHANGING CHAMBER FOR A DEVICE AND METHOD FOR THE ADDITIVE MANUFACTURING OF A THREE-DIMENSIONAL OBJECT
CHAMBRE ÉCHANGE POUR UN DISPOSITIF ET PROCÉDÉ DE FABRICATION GÉNÉRATIVE D'UN OBJET TRIDIMENSIONNEL

(43) Veröffentlichungstag der Anmeldung: 05.02.2020
(73) Patentinhaber: EOS GmbH Electro Optical Systems, 82152 Krailling (DE)
(72) Erfinder: PAWLICZEK, Sven, 82205 Gilching (DE); MAIER, Horst, 82152 Planegg (DE); EICHNER, Robert, 82377 Penzberg (DE); KRÜGER, Alexander, 98693 Ilmenau (DE)
(74) Vertreter: Prüfer & Partner mbB Patentanwälte · Rechtsanwälte
(86) Internationale Anmeldenummer: PCT/EP2017/060704
(87) Internationale Veröffentlichungsnummer: WO 2018/202305

(56) Entgegenhaltungen:
- WO-A1-2017/121995
- DE-U1-202016 007 110

## Beschreibung

Die vorliegende Erfindung bezieht sich auf eine Wechselkammer für eine Vorrichtung und für ein Verfahren zum generativen Herstellen eines dreidimensionalen Objekts durch schichtweises Aufbringen und selektives Verfestigen eines Aufbaumaterials, vorzugsweise eines Pulvers, sowie auf eine derartige Vorrichtung und ein derartiges Verfahren.

Aus der WO 2000/021736 ist eine Vorrichtung und ein Verfahren zum generativen Herstellen eines dreidimensionalen Objekts bekannt, bei der bzw. bei dem in einen Bauraum ein einen Begrenzungsrahmen bildender Wechselbehälter eingesetzt wird, in dem eine höhenverfahrbare Werkstückplattform als Boden integriert ist. Der Wechselbehälter kann nach dem Sintern des Objekts aus dem Bauraum entnommen werden, um ihn außerhalb der Sintermaschine abkühlen zu lassen. Unmittelbar nach dem Entnehmen des Wechselbehälters kann in die Sintermaschine ein neuer Wechselbehälter eingesetzt werden.

DE 20 2016 007 110 U1 beschreibt eine Kartusche zur Aufnahme, Speicherung und Ausgabe von pulverförmigem Material oder einem Gemisch aus pulverförmigem und gesintertem Material. Die Kartusche weist ein Kartuschengehäuse mit einem äußeren Kartuschenkörper und einem inneren Kartuschenkörper auf, sowie eine Verschlusseinrichtung und eine Hubvorrichtung, die innerhalb des inneren Kartuschenkörpers angeordnet ist.

Die Aufgabe der vorliegenden Erfindung besteht darin, eine alternative bzw. verbesserte Vorrichtung bzw. ein alternatives bzw. verbessertes Verfahren zum generativen Herstellen eines dreidimensionalen Objekts durch schichtweises Aufbringen und selektiven Verfestigen eines Aufbaumaterials bereitzustellen, bei der bzw. bei dem bevorzugt die Bedienungssicherung erhöht bzw. die Effizienz verbessert ist.

Die Aufgabe wird gelöst durch eine Wechselkammer für eine Vorrichtung zum Herstellen eines dreidimensionalen Objekts gemäß Patentanspruch 1, eine Vorrichtung zum Herstellen eines dreidimensionalen Objekts gemäß Patentanspruch 10 und ein Verfahren zum Herstellen eines dreidimensionalen Objekts gemäß Patentanspruch 13. Weiterbildungen der Erfindung sind jeweils in den abhängigen Ansprüchen angegeben. Dabei kann das Verfahren auch durch die unten stehenden bzw. in den abhängigen Ansprüchen ausgeführten Merkmale der Vorrichtungen weitergebildet sein oder umgekehrt, bzw. die Merkmale der Vorrichtungen können auch jeweils untereinander zur Weiterbildung genutzt werden.

Die erfindungsgemäße Wechselkammer für eine Vorrichtung zum Herstellen eines dreidimensionalen Objekts durch selektives schichtweises Verfestigen von Aufbaumaterial an dem Querschnitt des herzustellenden Objekts in der jeweiligen Schicht entsprechenden Stellen umfasst einen Bauraum zur Aufnahme für eine Bauplattform, auf welcher das dreidimensionale Objekt herstellbar ist, wobei der Bauraum in Richtung einer Oberseite der Wechselkammer hin temporär offen gestaltet ist, und optional einen Vorratsbehälter zum Bevorraten von Aufbaumaterial. Die Wechselkammer umfasst eine Seitenwandung und eine Abdeckung, wobei die Abdeckung dazu geeignet ist, die Wechselkammer derart an der Oberseite zu verschließen, dass Aufbaumaterial im Wesentlichen weder durch die Abdeckung aus der Wechselkammer heraus noch in diese hinein gelangen kann und wobei die Abdeckung mit der Seitenwandung verbunden, insbesondere schwenkbar und/oder verschiebbar verbunden ist.

Die Wechselkammer hat beispielsweise den Vorteil, dass sie in die Vorrichtung zum generativen Herstellen des dreidimensionalen Objekts einsetzbar und unmittelbar nach Herstellung des Objekts aus dieser herausnehmbar ist, weil sie mithilfe der Abdeckung zur Entnahme verschlossen werden kann. Wartezeiten nach Ende des Bauprozesses sind stark verkürzt oder nicht mehr erforderlich. Dadurch kann nach Fertigstellung eines Objekts unmittelbar eine andere, gleichartige Wechselkammer eingesetzt werden und damit Maschinenstillzeiten verringert werden und die Produktivität der Vorrichtung erhöht werden. Ferner kann beispielsweise die Wechselkammer für nachfolgende Schritte in einer Herstellungskette, beispielsweise einen Schritt des Abkühlens, sicher an andere Orte gebracht werden und so die Durchführung weiterer Schritte erleichtert werden.

Durch die Abdeckung der Wechselkammer wird insbesondere vermieden, dass Pulver aus der Wechselkammer, insbesondere an ihrer Oberseite, austreten kann und es somit zu einer Pulverkontamination der Umgebung und/oder eines Bedieners kommen kann, wenn die Wechselkammer aus der Vorrichtung entnommen wird und ggf. an einen anderen Ort transportiert wird. Im Fall von pulverförmigem Aufbaumaterial können somit Staubreaktionen bei der Lagerung und dem Transport der Wechselkammer mit dem darin befindlichen Objekt und Aufbaumaterial vermieden werden. Weiterhin kann beispielsweise ein Bediener vor der Gefahr von Verbrennungen durch zu heißes Aufbaumaterial und/oder Dämpfe geschützt werden.

Als Aufbaumaterial können verschiedene Arten von Pulver verwendet werden, insbesondere Metallpulver, Kunststoffpulver, Keramikpulver, Sand, inbesondere kunststoffummantelter Sand, gefüllte oder gemischte Pulver. Vorzugsweise ist die Wechselkammer so fest durch die Abdeckung verschließbar, dass Pulverkörner des Aufbaumaterials mit einer kleinsten vorhandenen Abmessung nicht in die Wechselkammer hinein bzw. herausgelassen werden können. Anstelle von Pulver können auch andere geeignete Materialien als Aufbaumaterial verwendet werden.

Vorzugsweise ist die Wechselkammer im Betrieb mit einer Hubeinrichtung verbunden und die Hubeinrichtung ist lediglich dann betätigbar, wenn die Wechselkammer an ihrer Oberseite geöffnet ist, d.h. die Abdeckung die Oberseite nicht verschließt. Die Hubeinrichtung kann sowohl eine Hubeinrichtung sein, die die gesamte Wechselkammer anhebt bzw. absenkt und/oder eine Hubeinrichtung die eine Plattform in dem Baubehälter und/oder einem Vorratsbehälter anhebt bzw. absenkt.

Damit kann beispielsweise die Betriebssicherheit der Vorrichtung weiter verbessert werden, weil es zwingend nötig ist, dass die Abdeckung die Wechselkammer nicht während des Baubetriebs verschließt. Mit anderen Worten existiert also eine Art Sperrmechanismus, der bei mittels der Abdeckung verschlossener Oberseite der Wechselkammer eine Bewegung der Hubeinrichtung verhindert.

Vorzugsweise ist im Betrieb das dreidimensionale Objekt in der Wechselkammer lediglich dann herstellbar, wenn die Wechselkammer an ihrer Oberseite geöffnet ist, d.h. die Abdeckung ihre Oberseite nicht verschließt. Damit können beispielsweise Bedienungsfehler vermieden werden und die Betriebssicherheit der Vorrichtung weiter verbessert werden. Hier gilt analog das im letzten Abschnitt Erwähnte.

Weiterhin ist vorzugsweise die Abdeckung geeignet, die Wechselkammer an ihrer Oberseite gasdicht zu verschließen. Dadurch wird ein Innenbereich der Wechselkammer mit dem darin befindlichen Pulver vor dem Eindringen von Gasen, zum Beispiel Sauerstoff, geschützt. Insbesondere wird vermieden, dass unverfestigtes Pulver, welches sich in dem Vorratsbehälter befindet, nach der Entnahme aus der Vorrichtung mit der Umgebungsluft bzw. anderen Gasen in Kontakt kommen kann und durch Reaktion, zum Beispiel Oxidation, oder Anreicherung (v.a. mit Sauerstoff) geschädigt bzw. verändert werden könnte. Dies ist insbersondere von Vorteil, wenn das Objekt und das nicht verfestigte Aufbaumaterial eine erhöhte Temperatur haben, insbesondere nach dem Herstellen des Objekts.

Das gasdichte Verschließen der Wechselkammer an ihrer Oberseite durch die Abdeckung erfolgt vorzugsweise mittels einer umlaufenden Dichtung, beispielsweise ein in einer Nut angebrachten Dichtring wie z.B. ein Silikonring.

Weiter bevorzugt ist die gesamte Wechselkammer gasdicht ausgebildet bzw. so verschließbar, dass sie gasdicht ausgebildet ist. Damit kann beispielsweise die Wechselkammer mit noch vom Herstellungsverfahren heißem Aufbaumaterial bzw. heißem dreidimensionalen Objekt aus der Vorrichtung entfernt werden, ohne dass die Gefahr von Entzündungen und/oder Explosionen und/oder unerwünschten chemischen Reaktionen besteht.

In einer Weiterbildung kann die Abdeckung der Wechselkammer mit einem Hitzeschutzmaterial versehen sein. Damit kann die Entnahme und der Weitertransport der Wechselkammer noch sicherer gemacht werden.

In einer noch weiteren Weiterbildung kann die Wechselkammer insgesamt thermisch isoliert sein.

Die Abdeckung kann ferner aus einer Platte oder aus mehreren einzelnen Segmenten bestehen, um den Bauraum zu minimieren bzw. eine Automatisierung für das Öffnen und Schließen der Abdeckung innerhalb der Vorrichtung, beispielsweise unter Schutzgasatmospäre zu realisieren. Die Verwendung von Segmenten hat zum Beispiel den Vorteil, dass sie geringere Abmessungen haben als eine einstückige Platte, so dass sie einfacher in der Vorrichtung zu verstauen bzw. unterzubringen sind.

Weiter vorzugsweise weist die Wechselkammer einen Sensor auf, welcher dazu geeignet ist zu erfassen, ob die Wechselkammer mittels der Abdeckung verschlossen oder geöffnet ist. Damit kann beispielsweise der Betrieb der Vorrichtung weiter vereinfacht werden und die Sicherheit erhöht werden, da das Sensorsignal dazu genutzt werden kann, einen Betrieb der Vorrichtung zu blockieren bzw. gezielt freizugeben.

Die Wechselkammer weist vorzugsweise eine Kopplungsvorrichtung auf, zum Koppeln an eine Transportvorrichtung, wobei die Kopplungsvorrichtung bevorzugt lediglich dann mit der Transportvorrichtung koppelbar ist, wenn die Wechselkammer durch die Abdeckung verschlossen ist. Damit wird die Gefahr von Fehlbedienungen reduziert und das Handling vereinfacht. Auch hier findet also ein Sperrmechanismus Anwendung, nämlich ein Automatismus, der den Transport der Wechselkammer nur in geschlossenem Zustand ermöglicht.

In einer Weiterbildung ist eine Sicherungseinrichtung vorgesehen, um die Wechselkammer während des Transports nicht zu verlieren, sie also ausreichend fest mit einer Transporteinrichtung (insbesondere formschlüssig) zu verbinden.

Vorzugsweise ist die Abdeckung durch Ausführen einer Schwenk- und/oder einer Translationsbewegung von einer geöffneten in eine geschlossene Position oder umgekehrt bringbar, wobei bevorzugt die Abdeckung beim Schließen zunächst von der geöffneten Position durch eine Schwenkbewegung in eine im Wesentlichen parallele Lage zu einem oberen Rand der Seitenwandung bringbar ist und anschließend sich eine Translationsbewegung im Wesentlichen parallel zum oberen Rand in die geschlossene Position bringbar ist und umgekehrt. Damit wird beispielsweise der Platz in der Vorrichtung optimal ausgenutzt. Ferner wird beispielsweise die Bedienbarkeit erleichtert.

Weiter bevorzugt erstreckt sich die Abdeckung in einer geöffneten Position im Wesentlichen parallel zu einem Abschnitt der Seitenwandung. Damit wird beispielsweise der Platz in der Vorrichtung noch besser ausgenutzt.

Vorzugsweise weist weiterhin die Seitenwandung und/oder die Abdeckung zumindest eine Führungseinrichtung auf zum Führen der Abdeckung beim Öffnen und Schließen der Abdeckung, wobei bevorzugt die Führungseinrichtung zumindest einen ersten und einen zweiten Abschnitt umfasst und der erste und der zweite Abschnitt in einem Winkel zueinander angeordnet sind und/oder wobei zumindest einer der beiden Abschnitte eine Krümmung aufweist. Dadurch hat die Wechselkammer mit der Abdeckung eine einfache und leicht zu bedienende Konstruktion.

Weiterhin weist die Wechselkammer vorzugsweise eine Verriegelung auf zum Verriegeln der Abdeckung in geschlossener und/oder offener Position. Damit wird die Betriebssicherheit weiter erhöht, da die Verriegelung sicherstellt, dass die Abdeckung aus ihrer gegenwärtigen Position nicht unkontrolliert herausbewegt werden kann.

Weiterhin ist die Wechselkammer bevorzugt ausgestattet und/oder verbunden mit einem Aktor, der im Betrieb eine automatische oder teilautomatische Bewegung der Abdeckung bewirkt. Damit kann beispielsweise die Bedienung weiter vereinfacht werden, indem ein Nutzer die Bewegung nicht selbständig ausführen muss, sondern die Bewegung kontrolliert bzw. unterstützt durch den Aktor abläuft.

In einer zusätzlichen Weiterbildung kann die Abdeckung oder die Kammerwandung mit einer Sensoreinrichtung ausgestattet sein, mit der die Überwachung z.B. des Sauerstoffgehalts und/oder der Temperatur in der Wechselkammer erfolgen kann. Die Sensorsignale können in einer externen Station, in die die Wechselkammer gebracht wird, überwacht werden und die Bedingungen entsprechend in der Wechselkammer geregelt werden.

Die erfindungsgemäße Vorrichtung zum Herstellen eines dreidimensionalen Objekts durch selektives schichtweises Verfestigen von Aufbaumaterial an dem Querschnitt des herzustellenden Objekts in der jeweiligen Schicht entsprechenden Stellen umfasst mindestens eine Einrichtung zum selektiven schichtweise Verfestigen des Aufbaumaterials an dem Querschnitt des herzustellenden Objekts in der jeweiligen Schicht entsprechenden Stellen und eine Wechselkammer wie oben beschrieben. Damit wird eine effiziente und betriebssichere Vorrichtung zum Herstellen eines dreidimensionalen Objekts bereitgestellt, die beispielsweise dieselben Vorteile hat, wie die oben beschriebene Wechselkammer. Außerdem erlaubt die Vorrichtung beispielsweise die Befüllung des Vorratsbehälters und die Entleerung des Überlaufbehälters ausserhalb der Vorrichtung aufgrund der Herausnehmbarkeit der Wechselkammer, was auch aus Gründen der Reinhaltung der Vorrichtung von Vorteil ist.

Vorzugsweise ist die Wechselkammer aus der Vorrichtung heraus entnehmbar und wieder in diese einsetzbar. Damit kann beispielsweise nach Entnahme der Wechselkammer sofort mit einem neuen Zyklus zum Aufbau eines dreidimensionalen Objekts begonnen werden.

Weiter vorzugsweise ist die Wechselkammer derart ausgeführt, dass die Abdeckung von einer geöffneten in eine geschlossene Position und umgekehrt bringbar ist, wenn die Wechselkammer in die Vorrichtung eingebracht ist, und/oder wobei die Wechselkammer lediglich dann aus der Vorrichtung heraus entnehmbar ist, wenn die Wechselkammer durch die Abdeckung verschlossen ist. Damit wird beispielsweise die Betriebssicherheit der Vorrichtung erhöht, da die Abdeckung bzw. die Wechselkammer jeweils immer nur dann bewegt werden können, wenn sie sich in einer dafür vorgesehenen Position bzw. einem dafür vorgesehenen Betriebszustand befinden, wiederum im Sinne einer Sperrfunktion.

In einer Weiterbildung weist die Vorrichtung ein Gehäuse auf mit einer Öffnung, durch welche die Wechselkammer einbringbar und herausnehmbar ist und wobei die Abdeckung in der geöffneten Position zur Öffnung hinweist. Weiter bevorzugt verdeckt die Abdeckung in der geöffneten Position die Kopplungsvorrichtung und/oder Griffe an der Wechselkammer, so dass die Wechselkammer aus dem Gehäuse nicht entnehmbar ist, wenn die Abdeckung in der geöffneten Position ist. Dies kann zusätzlich zur Betriebssicherheit beitragen und wirkt analog zu einem Sperrmechanismus.

Das erfindungsgemäße Verfahren zum Herstellen eines dreidimensionalen Objekts durch selektives schichtweises Verfestigen von Aufbaumaterial an dem Querschnitt des herzustellenden Objekts in der jeweiligen Schicht entsprechenden Stellen in einer Vorrichtung zum Herstellen eines dreidimensionalen Objekts wird mit einer zuvor beschriebenen Wechselkammer betrieben.

Vorzugsweise wird bei dem Verfahren die Wechselkammer mit geschlossener Abdeckung in die Vorrichtung eingebracht, die Abdeckung der Wechselkammer in der Vorrichtung geöffnet und das herzustellende Objekt bei geöffneter Abdeckung in der Wechselkammer hergestellt. Nach Beendigung des Herstellungsvorgangs wird die Wechselkammer in der Vorrichtung mit der Abdeckung verschlossen und die Wechselkammer mit dem hergestellten dreidimensionalen Objekt mit verschlossener Abdeckung aus der Vorrichtung heraus entnommen. Dadurch kommt es beispielsweise nicht zu Pulverkontaminationen der Umgebung und/oder des Bedieners. Ferner wird insbesondere vermieden, dass das Pulver mit Gasen aus der Umgebung in Kontakt kommt und dass durch Wartezeiten vor der Entnahme der Wechselkammer Maschinenstillzeiten verursacht werden. Damit kann beispielsweise das Verfahren effizient und sicher gestaltet werden.

Weitere Merkmale und Zweckmäßigkeiten der Erfindung ergeben sich aus der Beschreibung von Ausführungsbeispielen anhand der beigefügten Figuren.
- Fig. 1: ist eine schematische, teilweise im Schnitt dargestellte Ansicht einer Vorrichtung zum generativen Herstellen eines dreidimensionalen Objekts gemäß einer Ausführungsform der vorliegenden Erfindung.
- Fig. 2: ist eine schematische, perspektivische Ansicht der Vorrichtung zum Herstellen eines dreidimensionalen Objekts mit eingesetzter Wechselkammer gemäß einer Ausführungsform der Erfindung in geöffnetem Zustand der Abdeckung.
- Fig. 3: ist eine schematische, perspektivische Ansicht der Wechselkammer aus Fig. 2 mit geschlossener Abdeckung.
- Fig. 4: ist eine schematische, perspektivische Ansicht derselben Wechselkammer mit geöffneter Abdeckung.
- Fig. 5: ist eine schematische, perspektivische Ansicht derselben Wechselkammer mit einer weggelassenen Seitenwand und weggelassener Abdeckung.
- Fig. 6: ist eine schematische Ansicht eines Details aus Fig. 3.
- Fig. 7: ist eine schematische Wiedergabe eines Ausführungsbeispiels des erfindungsgemäßen Verfahrens.

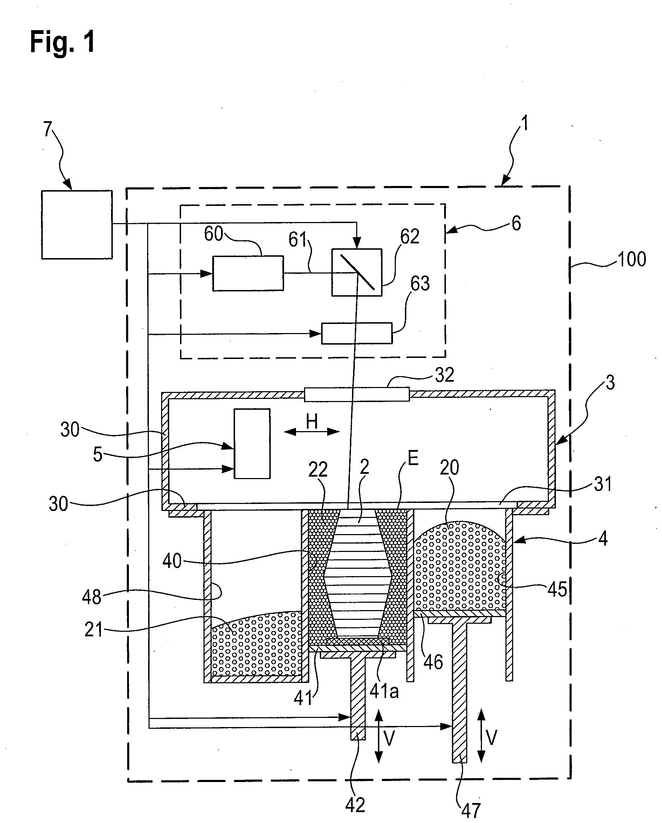

Im Folgenden wird mit Bezug auf Fig. 1 eine Ausführungsform der vorliegenden Erfindung beschrieben. Die in Fig. 1 dargestellte Vorrichtung ist eine Lasersinter- oder Laserschmelzvorrichtung 1 zum Herstellen eines dreidimensionalen Objekts 2. Die Vorrichtung enthält eine Prozesskammer 3 mit einer Kammerwandung 30 und einer Öffnung 31 am Boden. An die Prozesskammer 3 ist eine in die Vorrichtung 1 einbringbare und aus dieser herausnehmbare Wechselkammer 4 andockbar. Im angedockten Zustand ist das dreidimensionale Objekt 2 innerhalb der Wechselkammer 4 aufbaubar. Die Prozesskammer 3 und die Wechselkammer 4 sind vorzugsweise in einem Gehäuse 100 untergebracht.

Die Wechselkammer 4 wird durch einen Baubehälter 40, einen Vorrats bzw. Dosierbehälter 45 für ein durch elektromagnetische Strahlung verfestigbares Aufbaumaterial 20 sowie einen Überlaufbehälter 48 zur Aufnahme von überschüssigem Aufbaumaterial 21 gebildet. Das Aufbaumaterial ist vorzugsweise ein zum Lasersintern oder Laserschmelzen geeignetes Pulver. Der Baubehälter 40, der Vorratsbehälter 45 und der Überlaufbehälter 48 sind an ihrer Oberseite offen. In dem Baubehälter 40, welcher zusammen mit der Prozesskammer 3 einen Bauraum definiert, ist ein Bauplattformträger 41 angeordnet, der den Baubehälter 40 nach unten abschließt und damit dessen Boden bildet. Auf dem Bauplattformträger 41 ist eine Bauplattform 41a vorzusweise lösbar befestigt. Auf der Bauplattform 41a ist das dreidimensionale Objekt 2 aufbaubar. Zum Abdichten des Baubehälters 40 nach unten hin umfasst der Bauplattformträger 41 vorzugsweise in Fig. 1 nicht gezeigte Dichtungen. Der Bauplattformträger 41 ist auf oder an einer in einer vertikalen Richtung V bewegbaren Trägervorrichtung 42 befestigt. In Fig. 1 ist das in dem Baubehälter 40 auf der Bauplattform 41a zu bildende Objekt 2 in einem Zwischenzustand dargestellt mit mehreren verfestigten Schichten, umgeben von unverfestigt gebliebenem Aufbaumaterial 22.

In dem Vorratsbehälter 45 ist eine weitere Plattform 46 angeordnet, die den Vorratsbehälter 45 nach unten abschließt und damit dessen Boden bildet. Zum Abdichten des Vorratsbehälters 45 nach unten hin umfasst die Plattform 46 vorzugsweise in Fig. 1 nicht gezeigte Dichtungen. Die Plattform 46 ist auf oder an einer weiteren in einer vertikalen Richtung V bewegbaren Trägervorrichtung 47 befestigt. Die Trägervorrichtungen 42, 47 und der zugehörigen Bauplattformenträger 41 bzw. die Plattform 46 können auch einstückig ausgebildet sein.

Die Trägervorrichtung 42 für den Bauplattformträger 41 bzw. die Bauplattform 41a des Baubehälters 40 und die Trägervorrichtung 47 für die Plattform 42 des Vorratsbehälters 45 sind vorzugsweise mit in der Lasersintervorrichtung 1 vorgesehenen in Fig. 1 nicht gezeigten Hubeinrichtungen verbunden, über die eine vertikale Auf- und/oder Abwärtsbewegung erfolgt.

Durch den oberen Rand des Baubehälters 40 ist eine Arbeitsebene E definiert. Vorzugsweise sind der Vorratsbehälter 45 und/oder der Überlaufbehälter 48 derart angeordnet, dass der obere Rand des Vorratsbehälters 45 und/oder der obere Rand des Überlaufbehälters 48 in der Arbeitsebene E liegen.

Weiterhin weist die Vorrichtung 1 eine in den Figuren nicht gezeigte Hubeinrichtung auf, um die Wechselkammer 4 in dem Gehäuse 100 an die Prozesskammer 3 anzuheben. Die Wechselkammer 4 ist dadurch an einen unteren Rand der Wandung 30 der Prozesskammer 3 andockbar. In der Prozesskammer 3 ist ferner eine in einer horizontalen Richtung H bewegbare Beschichtervorrichtung 5 zum Aufbringen des Aufbaumaterials 20 auf die Arbeitsebene E vorgesehen. Außerdem weist die Prozesskammer 3 an ihrer der Wechselkammer abgewandten Oberseite ein Einkoppelfenster 32 zum Hindurchlassen von Strahlung, beispielsweise eine F-Theta Linse auf.

Die Lasersintervorrichtung 1 enthält zudem eine Belichtungsvorrichtung 6 mit einem Laser 60, der einen Laserstrahl 61 erzeugt, der vorzugsweise über eine Ablenkvorrichtung 62 ablenkbar ist und durch eine Fokussiervorrichtung 63 über das Einkoppelfenster 32 in die Prozesskammer 3 gelenkt und auf die Arbeitsebene E fokussiert wird. Vorzugsweise ist die Ablenkvorrichtung 62 ausgebildet, den Laserstrahl an jede gewünschte Stelle auf der Arbeitsebene E abzulenken.

Weiter enthält die Lasersintervorrichtung 1 eine Steuereinheit 7, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

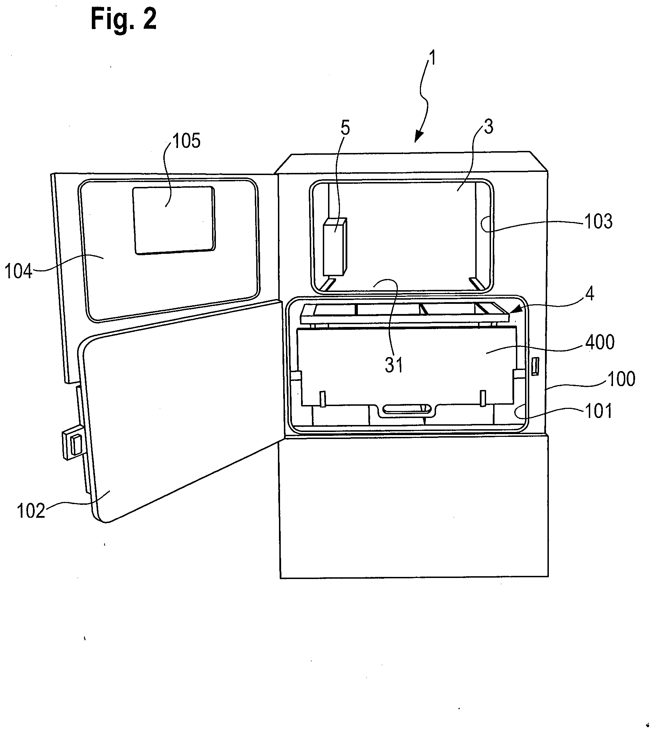

Fig. 2 zeigt eine weitere schematische Ansicht der in Fig. 1 gezeigten Vorrichtung 1. In dem Gehäuse 100 ist die Belichtungsvorrichtung 6 beispielsweise in einem oberen Bereich angeordnet (nicht dargestellt), darunter befindet sich die Prozesskammer 3 und unter dieser die Wechselkammer 4. Ein Teil der Wand des Gehäuses 100 kann gleichzeitig auch eine Wand der Prozesskammer 3 sein. Das Gehäuse 100 weist vorzugsweise eine erste Öffnung 101 zum Einbringen und Herausnehmen der Wechselkammer 4 auf. Vorzugsweise ist die erste Öffnung 101 durch eine Tür 102 verschließbar. Im Bereich der Prozesskammer 3 kann eine zweite Öffnung 103 vorgesehen sein, die ebenfalls über eine Tür 104 verschließbar ist, welche ein Sichtfenster 105 aufweisen kann.

Nachfolgend wird unter Bezugnahme auf die Fig. 2 bis 6 die Wechselkammer 4 im Detail beschrieben. In dem gezeigten Ausführungsbeispiel sind der Baubehälter 40, der Vorratsbehälter 45 und der Überlaufbehälter 48 und die zugehörigen Plattformen 41, 46 jeweils mit einem quadratischen oder rechteckigen Querschnitt ausgebildet. Dies ist aber nicht zwingend, sondern es können auch andere Formen sein. Die Wandungen der Behälter sind bevorzugt bündig aneinander angeordnet bzw. befestigt und formen Seitenwände der Wechselkammer 4, wobei eine Seitenwand 401 die eine lange Seite der Wechselkammer 4 bildet nach dem Einsetzen in das Gehäuse 100 zur ersten Öffnung 101 hin weist. Zum Andocken an die Prozesskammer 3 weist die Wechselkammer 4 an ihrer Oberseite einen den Baubehälter 40, den Vorratsbehälter 45 und den Überlaufbehälter 48 umgebenden Rand 43 auf, der geeignet ist, an eine Unterseite 31 in Form eines Rahmens der Prozesskammer 3 angedrückt zu werden. An der Oberseite des Randes 43 ist eine Dichtung 44, beispielsweise in Form eines in einer umlaufenden Nut liegenden Dichtrings, insbesondere eines Silikonrings vorgesehen.

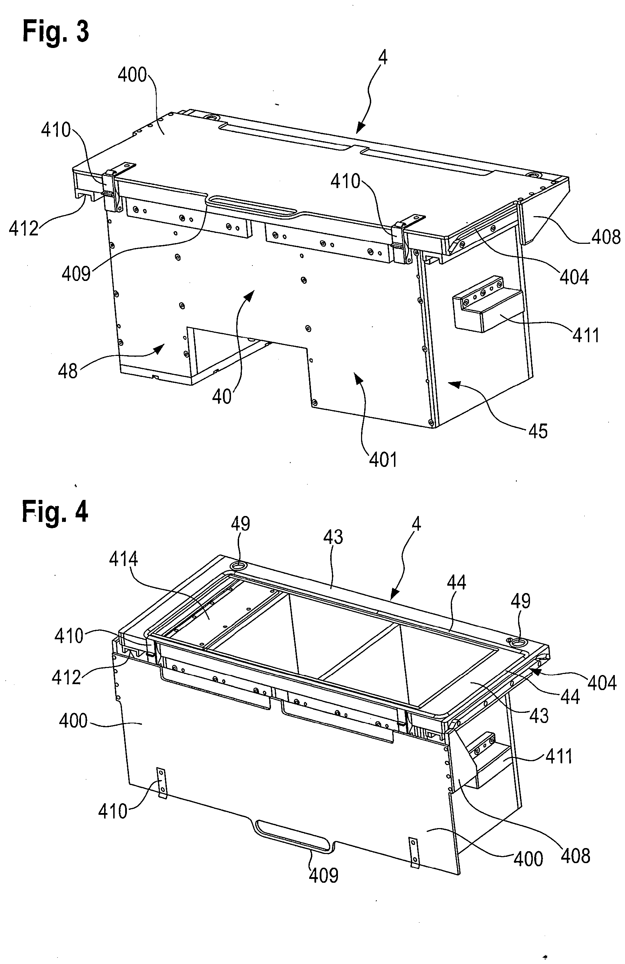

Ferner weist die Wechselkammer 4 eine Abdeckung 400 auf, die ausgebildet ist, die Wechselkammer 4 an ihrer Oberseite abzudecken und derart zu verschließen, dass Aufbaumaterial im Wesentlichen weder durch die Abdeckung 400 aus der Wechselkammer 4 heraus noch in diese hineingelangen kann. Ein Umriss der Abdeckung 400 entspricht im Wesentlichen einem Umriss des Rahmens 43. Dadurch liegt die Abdeckung 400, wenn sie in einer geschlossenen Stellung auf dem Rahmen 43 aufliegt, ebenso auf der Dichtung 44 auf, so dass die Wechselkammer in der geschlossenen Stellung der Abdeckung pulverdicht verschließbar ist. Vorzugsweise ist die Abdeckung in der in Fig. 3 gezeigten geschlossenen Stellung mit der Wechselkammer 4 verriegelbar, insbesondere dergestalt, dass die Abdeckung 400 gegen die Dichtung 44 gedrückt wird. In einer bevorzugten Ausführungsform verschließt die Abdeckung 400 die Wechselkammer 4 nicht nur pulverdicht, sondern auch gasdicht. Dann können keine Dämpfe, die in der Wechselkammer 4 möglicherweise durch das noch heiße Objekt entstehen, aus der Wechselkammer 4 herausgelangen. Andererseits kann auch kein Gas bzw. insbesondere Sauerstoff in die Wechselkammer hineingelangen, wenn diese aus der Vorrichtung 1 entnommen wird.

Zum korrekten Positionieren der Wechselkammer 4 an der Prozesskammer 3 können am oberen Rand 43 der Wechselkammer 4 Positionierhülsen 49 vorgesehen sein, die mit entsprechenden Positionierstiften an der Prozesskammer 3 zusammenwirken können.

Die Dichtung 44 ist auch geeignet, in einem geöffneten Zustand der Wechselkammer 4 die Verbindungsstelle zwischen der Wechselkammer 4 und der Prozesskammer 3 abzudichten.

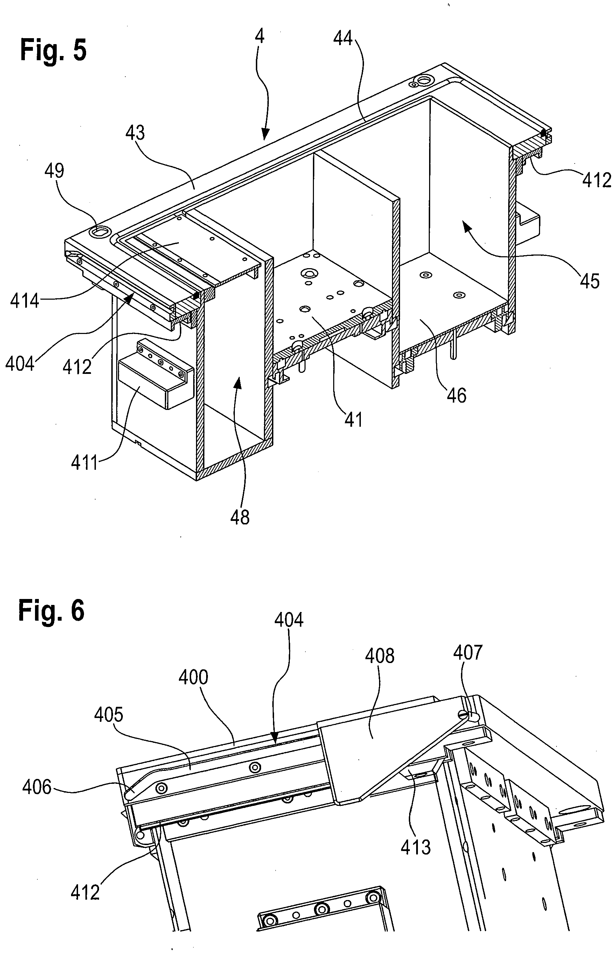

Die Abdeckung 400 ist mit der Wechselkammer 4 beweglich verbunden. Insbesondere ist die Abdeckung 400 von einer in Fig. 3 dargestellten geschlossenen Stellung in eine in Fig. 4 dargestellte offene Stellung und vice-versa bewegbar. Hierzu sind an gegenüberliegenden Seiten des Rahmens 43 jeweils Führungselemente 404 angebracht, die sich in horizontaler Richtung senkrecht zur Seitenwand 401 erstrecken. Die Führungselemente 404 weisen vorzugsweise eine Rille oder Nut auf, die in einem ersten Abschnitt 405 im Wesentlichen horizontal verläuft und in einem Endabschnitt 406 in Richtung der Seitenwand 401 nach unten geneigt verläuft. Wie insbesondre aus Fig. 6 erkennbar ist, ist die Nut an der Übergangsstelle der Abschnitte 405, 406 leicht verbreitert und nach oben gerundet, um ein leichtes Schwenken der Abdeckung 400 zu ermöglichen. Die beiden Enden der Nuten sind jeweils geschlossen. Die Führungselemente 404 dienen jeweils zum Aufnahmen eines Eingriffselements 407, welches beispielsweise als Rolle oder Stift ausgebildet sein kann und in den Nuten geführt wird. Die Eingriffselemente 407 sind jeweils am äußeren Rand der Abdeckung 400 an zu den Führungselementen 404 korrespondierenden Seiten mittels beispielsweise einer Dreiecksleiste 408 fest angebracht. Vorzugsweise sind die Eingriffselemente 407 von der eigentlichen Abdeckung beabstandet, um eine Schwenkbewegung zuzulassen.

Die Führungselemente 404 und die Eingriffselemente 407 sind derart ausgebildet und wirken derart zusammen, dass die Abdeckung 400 von einer geöffneten Position, wie in Fig. 4 dargestellt ist, in eine geschlossene Position, wie in Fig. 3 dargestellt ist, durch Schwenken der Abdeckung 400 und anschließendes Schieben der Abdeckung 400 auf den Rahmen 43 bewegen lässt. Ferner lässt sich die Abdeckung von der in der Fig. 3 dargestellten geschlossenen Position durch Verschieben und anschließendes Schwenken in die in Fig. 4 gezeigte geöffnete Stellung bringen. In der geöffneten Stellung erstreckt sich die Abdeckung 400 im Wesentlichen parallel zur Seitenwand 401 der Wechselkammer 400. In dieser Stellung ist auch das Eingriffselement 407 am Ende des geneigten Bereichs 406 der Nut und wird durch das geschlossene Ende der Nut 405 gehalten, so dass die Abdeckung 400 im Wesentlichen parallel zur Seitenwand 401 am Rahmen 43 hängt. Durch Schieben der Abdeckung 400 nach oben bewegt sich das Eingriffselement 407 in der Nut 405, bis die Abdeckung 400 über den Rahmen 43 geschoben ist und das Eingriffselement 407 am Ende der Nut 405 anschlägt.

Zum Betätigen des Öffnens und Schließens der Abdeckung 400 durch einen Bediener kann ein Griff 409 an der den Eingriffselementen 407 gegenüberliegenden Seite der Abdeckung 400 vorgesehen sein. Ferner sind optional Verriegelungselemente 410 an der Seitenwand 401 vorgesehen, die die Abdeckung 400 in der geschlossenen Stellung mit dem Rest der Wechselkammer 4 und der Abdeckung 400 verriegeln. Beispielsweise können die Verriegelungselemente 410 an der Seite des Griffs 409 angebracht sein, um ein Betätigen durch einen Benutzer vor Herausnahme der Wechselkammer 4 aus der Vorrichtung 1 zu erleichtern.

Die Wechselkammer 4 ist derart in die Vorrichtung 1 einsetzbar, dass die Seitenwand 401 der ersten Öffnung 101 zugewandt ist. In dieser Position sind dann auch der Griff 409 und die Verriegelungselemente 410 dem Bediener bei geöffneter Tür 102 zugänglich.

Zusätzlich kann die Wechselkammer 4 an den Seitenwänden angrenzend an die Seitenwand 401 Griffe 411 aufweisen, die zum Heben mit der Hand oder zum Ankoppeln an Geräte dienen. Vorzugsweise weist die Wechselkammer 4 am unteren Bereich des Rahmens 43 beidseitig der Seitenwand 401 Schienen oder andere Eingriffsstrukturen 412 auf, die beispielsweise zum Untergreifen mit Armen eines Hubwagens dienen. Eine Sicherungseinrichtung 413, z.B. ein Stift kann zum Sichern der Wechselkammer 4 am Hubwagen vorgesehen sein.

Bevorzugt ist ein Aktor (nicht gezeigt) vorgesehen, der im Betrieb eine automatische oder teilautomatische Bewegung der Abdeckung bewirkt.

Optional kann die Wechselkammer 4 eine schwenkbare Abdeckklappe 414 auf dem Überlaufbehälter 48 zum Staubschutz enthalten.

In dem Gehäuse 100 der Vorrichtung 1 kann an einer Halterung in einem Bereich hinter der Abdeckklappe 400, wie in Fig. 2 gezeigt ist, ein Sensor (nicht gezeigt) vorgesehen sein, der erkennt, ob sich die Abdeckklappe 400 vor ihm befindet. Somit erkennt der Sensor die geöffnete Position der Abdeckklappe 400. Die Steuerung der Hubeinrichtungen kann so ausgebildet sein, dass diese die Plattformen 41 bzw. 46 nur dann verfahren, wenn die Wechselkammer 4 geöffnet ist, d.h. sich die Abdeckung 400 in der geöffneten Position befindet.

Wenn die Wechselkammer 4 in die Vorrichtung 1 eingesetzt ist und sich die Abdeckung 400 in der geöffneten Position befindet, werden die Eingriffsstrukturen 412 und/oder die Griffe 411 durch die im Wesentlichen parallel zur Seitenwand 401 befindliche Abdeckung 400 verdeckt, so dass die Wechselkammer 4 in der geöffneten Position der Abdeckung 400 nicht aus der Vorrichtung 400 entnehmbar ist.

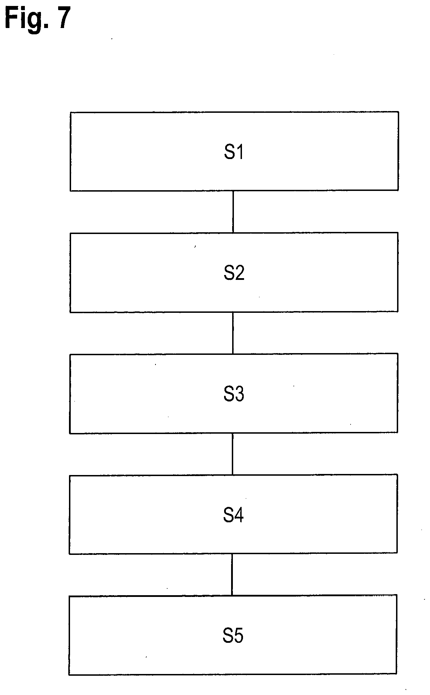

Unter Bezugnahme auf Fig. 7 wird im Betrieb die Wechselkammer 4 außerhalb der Vorrichtung 1 für den Bauvorgang vorbereitet. Dazu wird beispielsweise der Vorratsbehälter 45 mit Aufbaumaterial 20 befüllt. Anschließend wird die Abdeckung 400 von der geöffneten Position in die geschlossene Position gebracht und vorzugsweise für den Transport mittels der Verriegelungselemente 410 verriegelt. Sodann wird die Wechselkammer 4 durch die erste Öffnung 101 in das Gehäuse 100 mit geschlossener Abdeckung 400 eingebracht (Schritt S1). Das Einbringen erfolgt beispielsweise mittels einer Transportvorrichtung, z.B. mittels eines Hubwagens, oder auch von Hand.

Die Wechselkammer wird in dem Gehäuse auf eine Unterlage gesetzt, die mittels einer Hubvorrichtung angehoben werden kann und an die Hubvorrichtungen für die Trägervorrichtungen 42, 47 angekoppelt (wobei dieser Schritt auch später erfolgen kann, insbesondere nach den im nächsten Absatz genannten Maßnahmen).

Anschließend wird die Abdeckung von der geschlossenen Position in die geöffnete Position gebracht (Schritt S2). Hierzu wird, falls die Abdeckung 400 verriegelt wurde, die Verriegelung 410 gelöst. Die Abdeckung 400 wird mittels des Griffs 409 zunächst im Wesentlichen parallel zu dem Rahmen 43 zum Benutzer hin gezogen, wobei die Eingriffselemente 407 in den Führungselementen 404 geführt werden. Wenn die Eingriffselemente 407 in den schrägen Endbereich 406 der Nut gelangen, kann die Abdeckung 400 nach unten geschwenkt werden, so dass sie im Wesentlichen parallel zur Seitenwand 401 angeordnet ist. Der Sensor erkennt das Vorhandensein der Abdeckung und gibt ein Freigabesignal für die Hubvorrichtungen aus. Sodann ist es möglich, die gesamte Wechselkammer 4 mittels einer (nicht gezeigten) Hubvorrichtung gegen die Prozesskammer 3 anzuheben. Anschließend wird die Wechselkammer 4 mit der Prozesskammer 3 verriegelt. Dann wird die erste Tür 102 geschlossen.

Zum Betätigen der gesamten Vorrichtung wird auch die zweite Tür 104 geschlossen. Anschließend erfolgt der Bauprozess, in dem das Objekt hergestellt wird (Schritt S3) und der nachfolgend beschrieben ist. Zum Aufbringen einer Schicht des Aufbaumaterials 20 wird zunächst der Bauplattformträger 41 um eine Höhe abgesenkt, die der gewünschten Schichtdicke entspricht, und die Plattform 46 wird nach oben verfahren, um der Beschichtervorrichtung 5 eine ausreichende Menge an Aufbaumaterial 20 zuzuführen.

Durch Verfahren der Beschichtervorrichtung 5 über die Arbeitsebene E wird dann eine Schicht des Aufbaumaterials 20 auf der Bauplattform 41a bzw. auf einer bereits selektiv verfestigten Schicht des Aufbaumaterials 20 aufgebracht. Das Aufbringen erfolgt zumindest über den gesamten Querschnitt des herzustellenden Objekts 2, vorzugsweise über das gesamte Baufeld, also dem Bereich der Arbeitsebene E, der innerhalb der oberen Öffnung 103 des Baubehälters 40 liegt. Überschüssiges Aufbaumaterial 21 kann dabei dem Überlaufbehälter 48 zugeführt werden. Anschließend wird der Querschnitt des herzustellenden Objekts 2 von dem Laserstrahl 61 abgetastet, so dass das pulverförmige Aufbaumaterial 20 an den Stellen verfestigt wird, die dem Querschnitt des herzustellenden Objekts 2 entsprechen. Diese Schritte werden solange wiederholt, bis das Objekt 2 fertig gestellt ist.

Nach Beendigung des Bauvorganges wird zunächst (ggf. unter vorheriger Abkopplung der Hubvorrichtungen von den Trägervorrichtungen 42, 47) die Wechselkammer 4 von der Prozesskammer 3 abgekoppelt, indem sie nach unten verfahren wird. Nach Öffnen der Tür 102 kann der Benutzer die Abdeckung 400 schwenken und auf den Rahmen 43 der Wechselkammer 4 aufschieben und bei Bedarf verriegeln (Schritt S4). Wenn sich die Abdeckung 400 in der geschlossenen Position befindet, werden die Griffe 411 bzw. die Eingriffsstrukturen 412 für eine Hubeinrichtung wieder freigelegt und die Wechselkammer 4 kann entweder per Hand oder mittels einer Transportvorrichtung durch die Öffnung 101 aus der Vorrichtung 1 heraus entnommen werden (Schritt S5).

Bevorzugt unmittelbar nach Entnahme der Wechselkammer 4 kann eine weitere Wechselkammer 4 in die Vorrichtung 1 eingebracht werden, um einen weiteren Bauvorgang durchzuführen. Damit ist ein effizienter Betrieb möglich.

Die Wechselkammer 4 bzw. das fertige Objekt 2 können nach Bedarf weitere Prozessschritte durchlaufen. Diese können folgende Schritte oder eine Auswahl davon in im Wesentlichen beliebiger Reihenfolge enthalten:
- Abkühlen des herstellten Objekts 2 in der verschlossenen Wechselkammer.
- Entfernen der Abdeckung 400 von der Wechselkammer 4.
- Entfernen des das Objekt 2 umgebenden unverfestigten Aufbaumaterials.
- Entnehmen des Objekts 2 aus der Wechselkammer 4.
- Entfernen des Aufbaumaterials 21 aus dem Überlaufbehälter 48 und/oder aus dem Vorratsbehälter 45.
- Reinigen der Wechselkammer 4 und der darin angeordneten Elemente.

In einer abgewandelten Ausführungsform weist die Wechselkammer 4 nur einen Baubehälter 40 und einen Vorratsbehälter 45 auf. In einer weiter abgewandelten Ausführungsform weist die Wechselkammer 4 lediglich einen Baubehälter 40 auf. In einer noch weiteren Ausführungsform weist die Wechselkammer einen ersten Vorratsbehälter an einer Seite des Baubehälters und einen zweiten Vorratsbehälter, der im Wesentlichen so ausgebildet ist, wie der erste Vorratsbehälter an der gegenüberliegenden Seite des Baubehälters auf. Dadurch kann der Beschichter zum Auftrag einer weiteren Schicht Material aus dem zweiten Vorratsbehälter über das Baufeld auftragen und zurück zu dem ersten Vorratsbehälter kehren.

In einer weiteren Ausführungsform kann die Wechselkammer thermisch isoliert sein. Dadurch kann die Außenoberfläche auf einer niedrigeren Temperatur gehalten werden, als die Innenoberfläche der Wandung der Wechselkammer, was die Entnahme der Wechselkammer unmittelbar nach dem Bauvorgang vereinfacht und der Gefahr von Verbrennungen eines Bedieners vorbeugt.

Die Erfindung ist nicht auf die konkret beschriebene Form einer Laserintervorrichtung beschränkt, sondern kann in jeder beliebigen Laserintervorrichtung realisiert werden die das Einbringen einer Wechselkammer ermöglicht.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das generative Herstellen eines Objekts mittels schichtweisen Auftragens und selektiven Verfestigens eines Aufbaumaterials unabhängig von der Art und Weise, in der das Aufbaumaterial verfestigt wird.

## Patentansprüche

1. Wechselkammer für eine Vorrichtung zum Herstellen eines dreidimensionalen Objekts durch selektives schichtweises Verfestigen von Aufbaumaterial (20) an dem Querschnitt des herzustellenden Objekts (2) in der jeweiligen Schicht entsprechenden Stellen, wobei die Wechselkammer (4) umfasst
einen Bauraum (40) zur Aufnahme einer Bauplattform (41), auf welcher das dreidimensionale Objekt (2) herstellbar ist, wobei der Bauraum (40) in Richtung einer Oberseite der Wechselkammer (4) hin temporär offen gestaltet ist,
optional einen Vorratsbehälter (45) zum Bevorraten von Aufbaumaterial (20), und wobei
die Wechselkammer (4) eine Seitenwandung (401) und eine Abdeckung (400) umfasst,
wobei die Abdeckung (400) dazu geeignet ist, die Wechselkammer (4) derart an der Oberseite zu verschließen, dass Aufbaumaterial (20) im Wesentlichen weder durch die Abdeckung (400) aus der Wechselkammer (4) heraus noch in diese hineingelangen kann und
die Abdeckung (400) mit der Seitenwandung (401) verbunden, insbesondere schwenkbar und/oder verschiebbar verbunden, ist und
**dadurch gekennzeichnet, dass**
die Wechselkammer (4) im Betrieb zumindest mit einer Hubeinrichtung verbunden ist, die die Wechselkammer an eine Prozesskammer (3) andockt und die Hubeinrichtung lediglich dann betätigbar ist, wenn die Abdeckung (400) die Wechselkammer (4) nicht verschließt.

2. Wechselkammer nach Anspruch 1, wobei im Betrieb das dreidimensionale Objekt (2) in der Wechselkammer (4) lediglich dann herstellbar ist, wenn die Abdeckung (400) die Wechselkammer nicht verschließt.

3. Wechselkammer nach einem der Ansprüche 1 oder 2, wobei die Abdeckung (400) geeignet ist, die Wechselkammer (4) gasdicht zu verschließen.

4. Wechselkammer nach einem der Ansprüche 1 bis 3, die einen Sensor aufweist, welcher dazu geeignet ist zu erfassen, ob die Wechselkammer (4) mittels der Abdeckung (400) verschlossen oder geöffnet ist.

5. Wechselkammer nach einem der Ansprüche 1 bis 4, wobei die Wechselkammer (4) eine Kopplungsvorrichtung aufweist zum Koppeln an eine Transportvorrichtung, wobei die Kopplungsvorrichtung bevorzugt lediglich dann mit der Transportvorrichtung koppelbar ist, wenn die Wechselkammer (4) durch die Abdeckung (400) verschlossen ist.

6. Wechselkammer nach einem der Ansprüche 1 bis 5, wobei die Abdeckung (400) durch Ausführen einer Schwenk- und/oder einer Translationsbewegung von einer geöffneten in eine geschlossene Position oder umgekehrt bringbar ist, wobei bevorzugt die Abdeckung beim Schließen zunächst von der geöffneten Position durch eine Schwenkbewegung in eine im wesentlichen parallele Lage zu einem oberen Rand (43) der Seitenwandung (401) bringbar ist und anschließend durch eine Translationsbewegung im Wesentlichen parallel zum oberen Rand in die geschlossenen Position bringbar ist und umgekehrt.

7. Wechselkammer nach einem der Ansprüche 1 bis 6, wobei die Seitenwandung (401) und/oder die Abdeckung (400) zumindest eine Führungseinrichtung (404, 407) aufweist zum Führen der Abdeckung (400) beim Öffnen und Schließen der Abdeckung, wobei bevorzugt die Führungseinrichtung (404, 407) zumindest einen ersten Abschnitt (405) und einen zweiten Abschnitt (406) umfasst und der erste Abschnitt (405) und der zweite Abschnitt (406) in einem Winkel zueinander angeordnet sind und/oder wobei zumindest einer der beiden Abschnitte eine Krümmung aufweist.

8. Wechselkammer nach einem der Ansprüche 1 bis 7, wobei die Wechselkammer (4) eine Verriegelung (410) aufweist zum Verriegeln der Abdeckung (400) in geschlossener und/oder offener Position.

9. Wechselkammer nach einem der Ansprüche 1 bis 8, ausgestattet und/oder verbunden mit einem Aktor, der im Betrieb eine automatische oder teilautomatische Bewegung der Abdeckung bewirkt.

10. Vorrichtung zum Herstellen eines dreidimensionalen Objekts durch selektives schichtweises Verfestigen von Aufbaumaterial an dem Querschnitt des herzustellenden Objekts (2) in der jeweiligen Schicht entsprechenden Stellen, mit
mindestens einer Einrichtung zum selektiven schichtweisen Verfestigen des Aufbaumaterials (20) an dem Querschnitt des herzustellenden Objekts (2) in der jeweiligen Schicht entsprechenden Stellen **gekennzeichnet durch** eine Wechselkammer (4) gemäß einem der Ansprüche 1 bis 9.

11. Vorrichtung nach Anspruch 10, wobei die Wechselkammer (4) aus der Vorrichtung (1) heraus entnehmbar und wieder in diese einsetzbar ist.

12. Vorrichtung nach Anspruch 10 oder 11, wobei die Wechselkammer (4) derart ausgeführt ist, dass die Abdeckung (400) von einer geöffneten in eine geschlossene Position und umgekehrt bringbar ist wenn die Wechselkammer (4) in die Vorrichtung eingebracht ist und/oder wobei die Wechselkammer (4) lediglich dann aus der Vorrichtung heraus entnehmbar ist, wenn die Wechselkammer (4) durch die Abdeckung (400) verschlossen ist.

13. Verfahren zum Herstellen eines dreidimensionalen Objekts durch selektives schichtweises Verfestigen von Aufbaumaterial (20) an dem Querschnitt des herzustellenden Objekts (2) in der jeweiligen Schicht entsprechenden Stellen **gekennzeichnet durch** die Verwendung einer Vorrichtung (1) zum Herstellen eines dreidimensionalen Objekts nach einem der Ansprüche 10 bis 12.

14. Verfahren nach Anspruch 13, wobei
die Wechselkammer (4) mit geschlossener Abdeckung (400) in die Vorrichtung (1) eingebracht wird,
die Abdeckung (400) der Wechselkammer (4) in der Vorrichtung geöffnet wird,
das herzustellende Objekt (2) bei geöffneter Abdeckung (400) in der Wechselkammer (4) hergestellt wird,
die Wechselkammer (4) nach Beendigung des Herstellungsvorganges in der Vorrichtung (1) mit der Abdeckung (400) verschlossen wird und
die Wechselkammer (4) mit dem hergestellten dreidimensionalen Objekt mit verschlossener Abdeckung (400) aus der Vorrichtung (1) heraus entnommen wird.

## Claims

1. An interchangeable chamber for a device for producing a three-dimensional object by selectively layer-wise solidifying of building material (20) at locations that correspond to the cross-section of the object (2) to be produced in the respective layer, wherein the interchangeable chamber (4) comprises
a building space (40) for receiving a building platform (41) on which the three-dimensional object (2) can be produced, wherein the building space (40) is designed to be temporarily open in the direction of a top of the interchangeable chamber (4),
optionally a storage container (45) for storing building material (20), and wherein
the interchangeable chamber (4) comprises a side wall (401) and a cover (400),
wherein the cover (400) is adapted to close the interchangeable chamber (4) at the top such that building material (20) substantially cannot get through the cover (400) out of nor into the interchangeable chamber (4) and
the cover (400) is coupled with the side wall (401), in particular pivotably and/or displaceably coupled, and **characterized in that**
during operation, the interchangeable chamber (4) is coupled at least to a lifting device that docks the interchangeable chamber (4) to a processing chamber (3) and wherein the lifting device can only be actuated when the cover (400) does not close the interchangeable chamber (4).

2. The interchangeable chamber according to claim 1, wherein during operation, the three-dimensional object (2) can only be produced in the interchangeable chamber (4) when the cover (400) does not close the interchangeable chamber.

3. The interchangeable chamber according to one of claims 1 or 2, wherein the cover (400) is configured to seal the interchangeable chamber (4) in a gas-tight manner.

4. The interchangeable chamber according to one of claims 1 to 3, comprising a sensor that is configured to detect whether the interchangeable chamber (4) is closed or open by means of the cover (400).

5. The interchangeable chamber according to one of claims 1 to 4, wherein the interchangeable chamber (4) has a coupling device for coupling to a transport device, wherein preferably the coupling device can only be coupled to the transport device when the interchangeable chamber (4) is closed by means of the cover (400).

6. The interchangeable chamber according to one of claims 1 to 5, wherein the cover (400) can be brought from an open to a closed position or vice versa by performing a pivoting and/or translational movement, wherein preferably when closing, the cover can be brought first from the open position to a substantially parallel position to an upper edge (43) of the side wall (401) by a pivoting movement, and then can be brought to the closed position by a translational movement substantially parallel to the upper edge, and vice versa.

7. The interchangeable chamber according to one of claims 1 to 6, wherein the side wall (401) and/or the cover (400) has at least one guide element (404, 407) for guiding the cover (400) during opening and closing of the cover, wherein preferably the guide element (404, 407) comprises at least a first section (405) and a second section (406) and the first section (405) and the second section (406) are arranged at an angle to one another and/or wherein at least one of the two sections has a curvature.

8. The interchangeable chamber according to one of claims 1 to 7, wherein the interchangeable chamber (4) has a locking mechanism (410) for locking the cover (400) in the closed and/or open position.

9. The interchangeable chamber according to one of claims 1 to 8, equipped with and/or coupled to an actuator which causes an automatic or semi-automatic movement of the cover during operation.

10. A device for producing a three-dimensional object by selectively layer-wise solidifying of building material at locations that correspond to the cross-section of the object (2) to be produced in the respective layer, comprising
at least a device for selectively layer-wise solidifying the building material (20) at locations that correspond to the cross-section of the object (2) to be produced in the respective layer,
**characterized by** an interchangeable chamber (4) according to one of claims 1 to 9.

11. The device according to claim 10, wherein the interchangeable chamber (4) can be removed from the device (1) and inserted into it again.

12. The device according to claim 10 or 11, wherein the interchangeable chamber (4) is designed such that the cover (400) can be brought from an open to a closed position and vice versa when the interchangeable chamber (4) is inserted in the device and/or wherein the interchangeable chamber (4) can only be removed from the device when the interchangeable chamber (4) is closed by the cover (400).

13. A method of producing a three-dimensional object by selectively layer-wise solidifying of a building material (20) at locations that correspond to the cross-section of the object (2) to be produced in the respective layer, **characterized by** the use of a device (1) for producing a three-dimensional object according to one of claims 10 to 12.

14. The method according to claim 13, wherein
the interchangeable chamber (4) is introduced into the device (1) with its cover (400) closed,
within the device, the cover (400) of the interchangeable chamber (4) is opened,
the object (2) to be produced is produced in the interchangeable chamber (4) with the cover (400) open,
after completion of the production process, the interchangeable chamber (4) is closed with the cover (400) within the device (1) and
the interchangeable chamber (4) with the three-dimensional object produced is removed from the device (1) with the cover (400) closed.

## Revendications

1. Chambre interchangeable pour un dispositif de fabrication d'un objet tridimensionnel par solidification sélective, couche par couche, d'un matériau de construction (20) à des endroits qui correspondent à la section transversale de l'objet (2) à fabriquer dans la couche respective, la chambre interchangeable (4) comprenant
un espace de construction (40) destiné à recevoir une plate-forme de construction (41) sur laquelle l'objet tridimensionnel (2) peut être fabriqué, l'espace de construction (40) étant conçu temporairement ouvert en direction d'un côté supérieur de la chambre interchangeable (4),
optionellement, un réservoir (45) pour stocker le matériau de construction (20), et dans laquelle
la chambre interchangeable (4) comprend une paroi latérale (401) et un couvercle (400),
le couvercle (400) est adapté pour fermer la chambre interchangeable (4) sur le côté supérieur de telle sorte que le matériau de construction (20) ne peut sensiblement pas sortir de la chambre interchangeable (4) ou y entrer à travers le couvercle (400), et
le couvercle (400) est relié à la paroi latérale (401), en particulier de manière pivotante et/ou coulissante, et
**caractérisée en ce que**
la chambre interchangeable (4) est reliée, en fonctionnement, à au moins un dispositif de levage qui arrime la chambre interchangeable à une chambre de traitement (3) et le dispositif de levage ne peut être actionné que lorsque le couvercle (400) ne ferme pas la chambre interchangeable (4).

2. Chambre interchangeable selon la revendication 1, dans laquelle, en fonctionnement, l'objet tridimensionnel (2) peut uniquement être fabriqué dans la chambre interchangeable (4) lorsque le couvercle (400) ne ferme pas la chambre interchangeable.

3. Chambre interchangeable selon l'une des revendications 1 ou 2, dans laquelle le couvercle (400) est apte à fermer la chambre interchangeable (4) de manière étanche aux gaz.

4. Chambre interchangeable selon l'une des revendications 1 à 3, comprenant un capteur apte à détecter si la chambre interchangeable (4) est fermée au moyen du couvercle (400) ou ouverte.

5. Chambre interchangeable selon l'une des revendications 1 à 4, dans laquelle la chambre interchangeable (4) comporte un dispositif d'accouplement pour l'accouplement à un dispositif de transport, de préférence le dispositif d'accouplement pouvant être accouplé au dispositif de transport uniquement lorsque la chambre interchangeable (4) est fermée par le couvercle (400).

6. Chambre interchangeable selon l'une des revendications 1 à 5, dans laquelle le couvercle (400) peut être amené d'une position ouverte à une position fermée ou inversement en effectuant un mouvement de pivotement et/ou de translation, de préférence le couvercle pouvant être amené lors de la fermeture d'abord à partir de la position ouverte par un mouvement de pivotement dans une position sensiblement parallèle par rapport à un bord supérieur (43) de la paroi latérale (401) et ensuite par un mouvement de translation sensiblement parallèle au bord supérieur dans la position fermée, et inversement.

7. Chambre interchangeable selon l'une des revendications 1 à 6, dans laquelle la paroi latérale (401) et/ou le couvercle (400) comporte au moins un dispositif de guidage (404, 407) pour guider le couvercle (400) lors de l'ouverture et de la fermeture du couvercle, dans laquelle le dispositif de guidage (404, 407) comprend de préférence au moins une première portion (405) et une deuxième portion (406), et la première portion (405) et la deuxième portion (406) sont disposées selon un angle l'une par rapport à l'autre et/ou au moins l'une des deux portions présente une courbure.

8. Chambre interchangeable selon l'une quelconque des revendications 1 à 7, dans laquelle la chambre interchangeable (4) comprend un verrou (410) pour verrouiller le couvercle (400) en position fermée et/ou ouverte.

9. Chambre interchangeable selon l'une des revendications 1 à 8, équipée et/ou reliée à un actionneur qui, en fonctionnement, provoque un mouvement automatique ou semi-automatique du couvercle.

10. Dispositif pour la fabrication d'un objet tridimensionnel par solidification sélective, couche par couche, d'un matériau de construction à des endroits qui correspondent à la section transversale de l'objet (2) à fabriquer dans la couche respective, comprenant
au moins un dispositif pour la solidification sélective, couche par couche, du matériau de construction (20) à des endroits qui correspondent à la section transversale de l'objet à fabriquer (2) dans la couche respective,
**caractérisé par** une chambre interchangeable (4) selon l'une quelconque des revendications 1 à 9.

11. Dispositif selon la revendication 10, dans lequel la chambre interchangeable (4) est apte à être retirée du dispositif (1) et réinsérée dans celui-ci.

12. Dispositif selon la revendication 10 ou 11, dans lequel la chambre interchangeable (4) est réalisée de telle sorte que le couvercle (400) est apte à être amené d'une position ouverte à une position fermée et inversement lorsque la chambre interchangeable (4) est introduite dans le dispositif et/ou dans lequel la chambre interchangeable (4) ne peut être retirée du dispositif que lorsque la chambre interchangeable (4) est fermée par le couvercle (400).

13. Procédé de fabrication d'un objet tridimensionnel par solidification sélective, couche par couche, d'un matériau de construction (20) à des endroits qui correspondent à la section transversale de l'objet (2) à fabriquer dans la couche respective,
**caractérisé par** l'utilisation d'un dispositif (1) pour la fabrication d'un objet tridimensionnel selon l'une des revendications 10 à 12.

14. Procédé selon la revendication 13, dans lequel
la chambre interchangeable (4) est introduite dans le dispositif (1) avec le couvercle (400) fermé,
le couvercle (400) de la chambre interchangeable (4) est ouvert dans le dispositif,
l'objet (2) à fabriquer est fabriqué dans la chambre interchangeable (4) avec le couvercle (400) ouvert,
la chambre interchangeable (4) est fermée par le couvercle (400) après la fin du processus de fabrication dans le dispositif (1) et
la chambre interchangeable (4) comprenant l'objet tridimensionnel fabriqué est retirée du dispositif (1) avec le couvercle (400) fermé.
